# EUROPEAN PATENT APPLICATION

(11) **EP 4 579 968 A1**
(43) Date of publication of application: **02.07.2025**
(21) Application number: 24204029.3
(22) Date of filing: 01.10.2024
(51) Int. Cl.: H02B 1/32, H02B 1/30

(54) **COMBINER CABINET AND ENERGY STORAGE DEVICE**

(30) Priority: 29.12.2023 CN 202323666540 U
(71) Applicant: Eve Energy Storage Co., Ltd., Wuhan, Hubei 430000 (CN)
(72) Inventor: XIAO, Dongming, Wuhan, Hubei, 430000 (CN); WANG, Mengchun, Wuhan, Hubei, 430000 (CN); XIAO, Xiong, Wuhan, Hubei, 430000 (CN); SHUAI, Changjun, Wuhan, Hubei, 430000 (CN)
(74) Representative: Herrero & Asociados, S.L.

(57) **Abstract**

A combiner cabinet (100) and an energy storage device (1000) are provided. The combiner cabinet (100) includes a cabinet body (11) and a power distribution unit (12), a control unit (13) and a combiner unit (14) that are arranged in the cabinet body. The cabinet body (11) is provided with an opening (110) and a first storage space (111), a second storage space (112) and a third storage space (113) that are sequentially arranged from top to bottom in a vertical direction. The power distribution unit (12) is arranged in the first storage space. The opening (110) is respectively in communication with the first storage space, the second storage space and the third storage space. The power distribution unit (112) is arranged in the first storage space, the control unit is arranged in the second storage space, and the combiner unit is arranged in the third storage space.

## Description

### TECHNICAL FIELD

The present disclosure relates to the technology field of energy storage, and in particular, to a combiner cabinet and an energy storage device.

### BACKGROUND

Combiner cabinet are used to distribute electrical energy, and are equipped with a plurality of control devices. These control devices mainly constitute combiner circuits, control circuits, and power distribution circuits in the combiner cabinet. In related technologies, these control devices are usually integrated into one cabinet body.

However, the integration of the control devices, especially communication devices and power supply devices, into one combiner cabinet results in poor reliability of power supply and communication. In addition, it is difficult for workers to maintain various functional circuits, for example, such as difficulty in operating when replacing a certain device, which makes the combiner cabinet difficult to maintain.

### SUMMARY

In a first aspect, the present disclosure provides a combiner cabinet including a cabinet body, and a power distribution unit, a control unit and a combiner unit arranged inside the cabinet body. The cabinet body is provided with an opening and a first storage space, a second storage space and a third storage space that are sequentially arranged from top to bottom in a vertical direction. The opening is respectively in communication with the first storage space, the second storage space and the third storage space. The power distribution unit is arranged in the first storage space, the control unit is arranged in the second storage space, and the combiner unit is arranged in the third storage space.

In a second aspect, the present disclosure provides an energy storage device including a plurality of battery clusters and the combiner cabinet provided in the first aspect. The plurality of battery clusters are electrically coupled to the combiner unit respectively.

Beneficial effects of the combiner cabinet and the energy storage device provided in the present disclosure are as follows. The combiner cabinet includes the cabinet body and the power distribution unit, the control unit and the combiner unit arranged inside the cabinet body. The first storage space, the second storage space and the third storage space that are sequentially arranged from top to bottom in the vertical direction are formed in the cabinet body. The power distribution unit is arranged in the first storage space, the control unit is arranged in the second storage space, and the combiner unit is arranged in the third storage space. In the present disclosure, the spatial arrangement in the combiner cabinet is clear, with the functional units allocated to different storage spaces, ensuring that the functional units do not interfere with each other and have high reliability. In addition, the power distribution unit is arranged in the first storage space at the top to facilitate user operation. The combiner unit is arranged in the third storage space at the bottom to facilitate external connection and maintenance.

### BRIEF DESCRIPTION OF THE DRAWINGS

FIG. 1 is a structural schematic diagram of a combiner cabinet at a first perspective according to some embodiments.
FIG. 2 is a structural schematic diagram of the combiner cabinet at a second perspective according to some embodiments.
FIG. 3 is a structural schematic diagram of a first storage space of the combiner cabinet according to some embodiments.
FIG. 4 is a structural schematic diagram of a second storage space and a third storage space of the combiner cabinet according to some embodiments.
FIG. 5 is a structural schematic diagram of an energy storage device according to some embodiments.

Reference numbers in the drawings: 1000, energy storage device; 100, combiner cabinet; 11, cabinet body; 110, opening; 1101, first sub-opening; 1102, second sub-opening; 111, first storage space; 112, second storage space; 113, third storage space; 114, sliding slot; 115, fixing member; 12, power distribution unit; 121, power distribution element; 13, control unit; 131, UPS energy storage battery; 132, battery management module; 14, combiner unit; 141, copper bar; 142, isolation switch; 151, first partition plate; 152, second partition plate; 153, third partition plate; 161, first cabinet door; 1611, human-machine interaction display screen; 1612, indicator light; 162, second cabinet door; 1621, electromagnetic lock; 171, first wiring clip; 172, second wiring clip; 173, third wiring clip; 174, winding element; 18, transverse sliding rail; 19, communication unit; 200, battery cluster.

### DETAILED DESCRIPTION

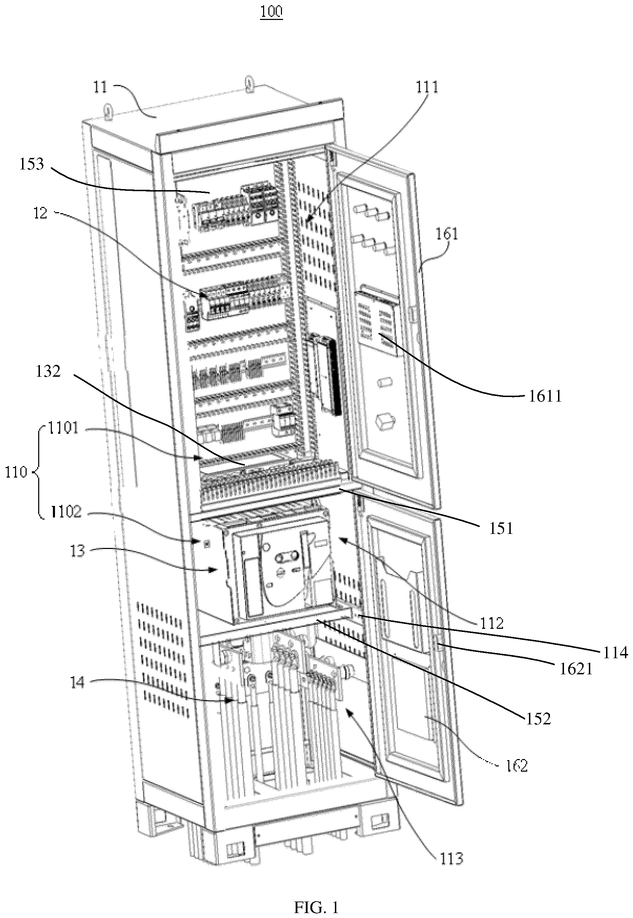

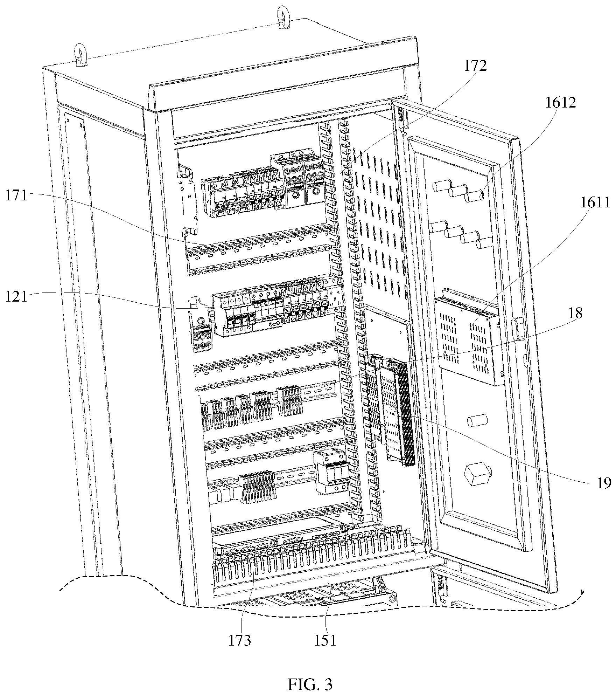

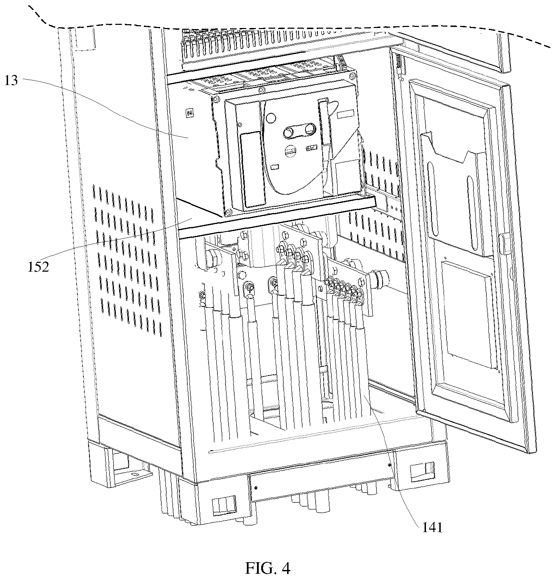

Referring to FIGS. 1-4, a combiner cabinet 100 of this embodiment includes a cabinet body 11. The cabinet body 11 is provided with an opening 110 and a first storage space 111, a second storage space 112 and a third storage space 113 that are sequentially arranged from top to bottom in a vertical direction. The opening 110 is respectively in communication with the first storage space 111, the second storage space 112 and the third storage space 113. Each of the storage spaces are configured to accommodate different functional units.

The combiner cabinet 100 further includes a power distribution unit 12, a control unit 13 and a combiner unit 14 that are arranged inside the cabinet body 11. Specifically, the power distribution unit 12 is arranged in the first storage space 111, the control unit 13 is arranged in the second storage space 112, and the combiner unit 14 is arranged in the third storage space 113. By means of the division of the storage spaces, different functional units are placed in different spaces, thereby avoiding interference between the functional units, improving the reliability of the functional units, and facilitating maintenance.

In addition, in the combiner cabinet 100, the power distribution unit 12 includes power distribution elements 121 such as a breaker, a relay, an AC/DC module, etc., which are configured to distribute converged electrical energy. Due to the need for frequent user operation on the power distribution unit 12, it is placed in the first storage space 111 at the top. While the combiner unit 14 requires less user operation, and mainly composed of exposed copper bars 141 which presents a high safety risk, therefore, it is placed in the third storage space 113 at the bottom, that is close to the ground.

In this embodiment, the cabinet body 11 is provided with an accommodating space, which is provided with a first partition plate 151 and a second partition plate 152 arranged in the vertical direction, so as to divide the accommodating space into the first storage space 111, the second storage space 112 and the third storage space 113. At least one of the first partition plate 151 and the second partition plate 152 is movably arranged in the accommodating space of the cabinet body 11, for example, they can be movably arranged in the accommodating space of the cabinet body 11 in the vertical direction and a horizontal direction. Specifically, at least one of the first partition plate 151 and the second partition plate 152 is movably arranged in the accommodating space of the cabinet body 11 in the vertical direction, and corresponding storage spaces may become larger or smaller. For example, the cabinet body 11 is provided with at least two groups of sliding slots (also named sliding rails) 114 (as shown in FIG. 1)arranged in the vertical direction. In an embodiment, each group of the sliding slots 114 can include two sliding slots. The partition plate 151 or 152 is provided on any one group of the sliding slots 114, so that an storage space formed between the partition plate and the cabinet body 11, as well as an storage space formed between the partition plates can change in size. In one embodiment, each group of the sliding slots 114 extend in the horizontal direction, and the partition plate 151 or 152 is provided on any one group of the sliding slots 114, so as to achieve horizontal extraction from the cabinet body 11. That is, the partition plate is also movably provided in the accommodating space in the horizontal direction, and the functional units can be placed on the partition plate and can be extracted from the cabinet body 11 for maintenance.

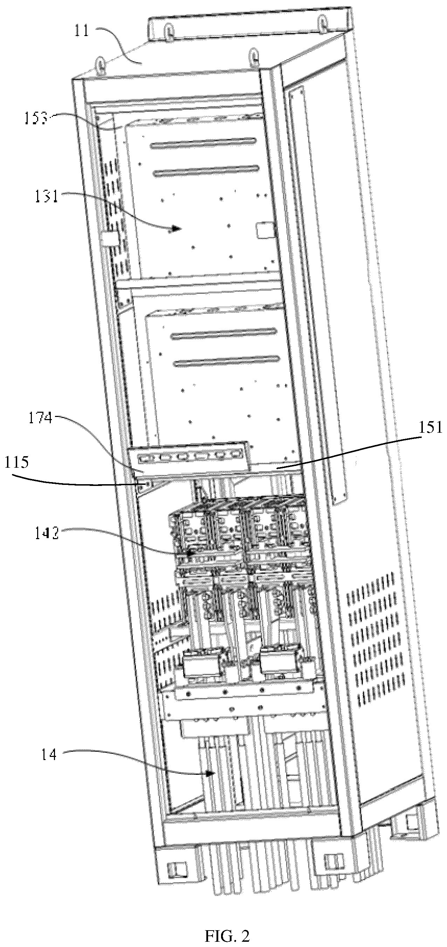

In another embodiment, at least one of the first partition plate 151 and the second partition plate 152 may be movably arranged only in the vertical direction in the accommodating space of the cabinet body 11. For example, the cabinet body 11 is provided with at least one group of fixing members 115 (as shown in FIG. 2) arranged in the vertical direction, and different group of fixing members may be selected for fixing of the partition plate 151 or 152 according to size requirements of the storage spaces, so that corresponding storage spaces may become larger or smaller. In an embodiment, each group of the fixing members 115 can include two fixing members. The fixing member 115 may be, for example, a snap-fit groove, and a buckle is provided on the corresponding partition plate, so that the corresponding partition plate is fixed by means of a snap-fit between the snap-fit groove and the buckle.

In another embodiment, at least one of the first partition plate 151 and the second partition plate 152 may be movably arranged only in the horizontal direction in the accommodating space of the cabinet body 11. For example, the cabinet body 11 is provided with sliding slots or sliding rails corresponding to the movable partition plate. The sliding slots or the sliding rails extend in the horizontal direction, and the partition plate is provided on the sliding slots or the sliding rails, so as to achieve movable extraction in the horizontal direction. The number of the sliding slots or the sliding rails can correspond to the number of movable partition plate.

In a specific embodiment, the second partition plate 152 is movably arranged only in the horizontal direction in the cabinet body 11. The control unit 13 is arranged on the second partition plate 152. The control unit 13 includes a uninterruptible power supply (UPS) host. When a user needs to detect or repair the UPS host, the second partition plate 152 can be pulled out to facilitate operation on the UPS host.

In this embodiment, the first partition plate 151 is fixed to the cabinet body 11 according to specific conditions of the functional units. Compared to other units, due to a large number, small sizes, as well as complex wiring of the power distribution elements 121 of the power distribution unit 12, a movable arrangement for the first partition plate 151 is not conducive to user operation. Therefore, the first partition plate 151 is fixedly arranged to form the first storage space 111 as a fixed space.

The combiner cabinet 100 further includes a first cabinet door 161 and a second cabinet door 162, both of which are provided on the cabinet body 11 to close the opening 110 of the cabinet body 11. In this embodiment, the opening 110 of the cabinet body 11 includes a first sub-opening 1101 and a second sub-opening 1102. The first sub-opening 1101 is at least in communication with the first storage space 111, the second sub-opening 1102 is at least in communication with the third storage space 113. The first cabinet door 161 at least closes the first sub-opening 1101 corresponding to the first storage space 111, and the second cabinet door 162 at least closes the second sub-opening 1102 corresponding to the third storage space 113. In an embodiment, the first sub-opening 1101 is further in communication with the second storage space 112, thus the first cabinet door 161 can be further configured to close the opening corresponding to the second storage space 112. In another embodiment, the second sub-opening 1102 is further in communication with the second storage space 112, thus the second cabinet door 162 can be further configured to close the opening corresponding to the second storage space 112.

In this embodiment, the second sub-opening 1102 is in communication with the second storage space 112 and the third storage space 113 respectively. A dimension of the first sub-opening 1101 in the vertical direction is greater than or equal to a dimension of the second sub-opening 1102 in the vertical direction. The first cabinet door 161 is movably connected to the cabinet body 11 to open or close the first sub-opening 1101, the second cabinet door 162 is movably connected to the cabinet body 11 to open or close the second sub-opening 1102.

The combiner unit 14 is arranged in the third storage space 113. The second cabinet door 162 is provided with an electromagnetic lock 1621 because of the risk of high voltage electricity being prone to occur in the combiner unit 14. The control unit 13 includes a battery management module (BMS) 132. The BMS 132 is coupled to the electromagnetic lock 1621, and locks the electromagnetic lock 1621 when the combiner unit 14 operates, so as to prevent the second cabinet door 162 from being opened; while unlocks the electromagnetic lock 1621 only when the combiner unit 14 stops operating, so that the second cabinet door 162 can be opened. By means of the arrangement of the electromagnetic lock 1621, the security of the combiner cabinet 100 is ensured, and the risk of electric shock is avoided.

The first cabinet door 161 is arranged to correspond to the first storage space 111, and is more operated by the user than the second cabinet door 162. Therefore, the first cabinet door 161 is provided with a man-machine interaction display screen 1611 and indicator lights 1612.

The power distribution unit 12 in the first storage space 111 is configured to distribute electrical energy, so there are many and messy wiring in the first storage space 111. In this embodiment, the first storage space 111 is further provided with a plurality of first wiring clips 171 arranged transversely and a plurality of second wiring clips 172 arranged vertically, so as to better organize the wiring in the first storage space 111.

The wiring clips are specifically provided on side walls and a rear wall of the cabinet body 11, so that cable clamping slots of the first wiring clips 171 and the second wiring clips 172 all face towards the opening 110 of the cabinet body 11 to facilitate wiring organization. One side of the first partition plate 151 close to the opening 110 of the cabinet body 11 is provided with a plurality of third wiring clips 173 arranged transversely, and cable clamping slots of the third wiring clips 173 face upwards, so as to facilitate wiring organization in the first storage space 111.

The power distribution unit 12 includes a plurality of power distribution elements 121. The first storage space 111 is further provided with a transverse sliding rail 18, and the plurality of power distribution elements 121 are movably arranged on the transverse sliding rail 18. Specifically, the power distribution element 121 may be sleeved on the transverse sliding rail 18 and also clamped in sliding slots of the transverse sliding rail 18, so as to realize sliding of the power distribution element 121 on the sliding rail 18, thereby facilitating space adjustment. Multiple transverse sliding rails 18 can be provided in the combiner cabinet 100 according to actual situations.

The combiner cabinet 100 is further provided with a communication unit 19, which is arranged on the side wall of the cabinet body 11 and located in the first storage space 111. The wiring of the communication unit 19 can be arranged on the side wall of the cabinet body 11. Space utilization can be better achieved by arranging the communication unit 19 on the side wall of the cabinet body 11.

The first storage space 111 can be further provided with a third partition plate 153 to divide the first storage space 111 into a space facing the first cabinet door 161 and a space facing away from the first cabinet door 161. The first wiring clip 171, the second wiring clip 172 and the transverse sliding rail 18 can all be provided on the third partition plate 153. The space facing the first cabinet door 161 is provided with the power distribution unit 12, the space facing away from the first cabinet door 161 is provided with a UPS energy storage battery 131 connected to the UPS host. The space facing away from the first cabinet door 161 is further provided with a winding element 174, which can organize the wiring in the entire first storage space 111, i. e. redundant wiring can be wrapped on the winding element 174 to make the wiring in the space more neat.

The combiner unit 14 in the third storage space 113 is configured to converge electrical energy and is arranged at the bottom of the cabinet body 11. The combiner unit 14 includes a plurality of copper bars 141 that extend out from the bottom of cabinet body 11 to facilitate connection to the outside.

The combiner unit 14 further includes an isolation switch 142, which can be arranged in the second storage space 112 and is an element that does not require frequent operation. The isolation switch 142 is arranged at a side facing away from the second cabinet door 162 and can be fixedly arranged with respect to the cabinet body 11 due to the lack of frequent maintenance.

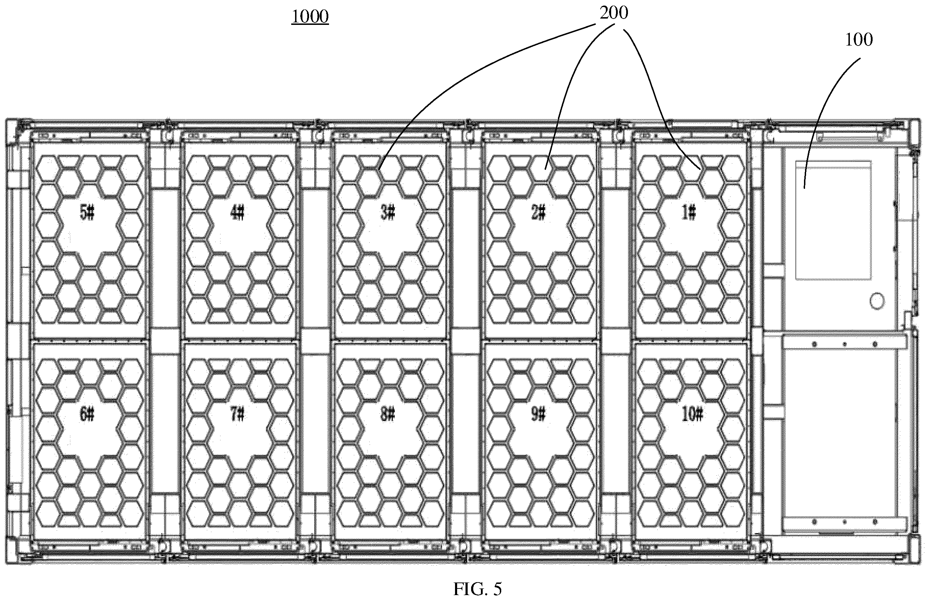

Referring to FIG. 5, the present disclosure further provides an energy storage device 1000. The energy storage device 1000 includes a plurality of battery clusters 200 and the combiner cabinet 100 provided by the above embodiments of the present disclosure. The plurality of battery clusters 200 are electrically coupled to combiner units 14 of the combiner cabinet 100, respectively.

The structural arrangement of the combiner cabinet 100 provided in the embodiments of the present disclosure takes into account functional characteristics of each functional unit, and sets the power distribution unit 12 with more wires in the first storage space 111 located at an upper part of the cabinet body 11 to meet high safety requirements, sets the combiner unit 14 with a larger connection elements in the third storage space 113 at a lower part of the cabinet body 11, and adopts a drawer-type structure for the control unit 13 in the second storage space 112. The combiner cabinet 100 in the embodiments of the present disclosure has a simple overall space design and is easy to maintain. In addition, the second cabinet door 162 is separately provided for the combiner unit 14, utilizing an electrically controllable electromagnetic lock 1621 to improve overall safety. In the present disclosure, the spatial arrangement in the combiner cabinet 100 is clear, with the functional units allocated to different storage spaces, ensuring that the functional units do not interfere with each other and have high reliability. In addition, the power distribution unit 12 is arranged in the first storage space 111 at the top to facilitate user operation. The combiner unit 14 is arranged in the third storage space 113 at the bottom to facilitate external connection and maintenance.

## Claims

1. A combiner cabinet (100), comprising:
a cabinet body (11), wherein the cabinet body (11) is provided with an opening (110) and a first storage space (111), a second storage space (112), and a third storage space (113) that are sequentially arranged from top to bottom in a vertical direction; wherein the opening (110) is respectively in communication with the first storage space (111), the second storage space (112) and the third storage space (113); and
a power distribution unit (12), a control unit (13) and a combiner unit (14) arranged inside the cabinet body (11); wherein the power distribution unit (12) is arranged in the first storage space (111), the control unit (13) is arranged in the second storage space (112), and the combiner unit (14) is arranged in the third storage space (113).

2. The combiner cabinet (100) according to claim 1, wherein the cabinet body (11) is provided with an accommodating space; wherein the accommodating space is provided with a first partition plate (151) and a second partition plate (152) arranged in the vertical direction, so as to divide the accommodating space into the first storage space (111), the second storage space (112), and the third storage space (113); wherein at least one of the first partition plate (151) and the second partition plate (152) is movably arranged in the accommodating space.

3. The combiner cabinet (100) according to claim 2, wherein at least one of the first partition plate (151) and the second partition plate (152) is movably arranged in the accommodating space in any one or a combination of two of the vertical direction and a horizontal direction.

4. The combiner cabinet (100) according to claim 3, wherein the cabinet body (11) is provided with at least one group of sliding slots (114) arranged in the vertical direction; wherein each group of the the sliding slots (114) extend in the horizontal direction and configured to mount the first partition plate (151) or the second partition plate (152);
or, the cabinet body (11) is provided with at least one group of fixing members (115) arranged in the vertical direction; wherein each group of the fixing members (115) extend in the horizontal direction and configured to mount the first partition plate (151) or the second partition plate (152).

5. The combiner cabinet (100) according to claim 1, further comprising a first cabinet door (161) and a second cabinet door (162) movably connected to the cabinet body (11);
wherein the opening (110) of the cabinet body (11) comprises a first sub-opening (1101) and a second sub-opening (1102); wherein the first sub-opening (1101) is at least in communication with the first storage space (111), while the second sub-opening (1121) is at least in communication with the third storage space (113); wherein the first cabinet door (161) is at least configured to close the first sub-opening (1101) corresponding to the first storage space (111); the second cabinet door (162) is at least configured to close the second sub-opening (1102) corresponding to the third storage space (113).

6. The combiner cabinet (100) according to claim 5, wherein the second cabinet door (162) is provided with an electromagnetic lock (1621); the control unit (13) comprises a battery management module (132) coupled to the electromagnetic lock (1621); wherein the battery management module (132) is configured to lock the electromagnetic lock (1621) when the combiner unit (14) operates, so as to prevent the second cabinet door (162) from being opened; the battery management module (132) is further configured to unlock the electromagnetic lock (1621) when the combiner unit (14) stops operating, so that the second cabinet door (162) is able to be opened.

7. The combiner cabinet according to claim 5, wherein the first cabinet door (161) is provided with a man-machine interaction display screen (1611) and indicator lights (1612).

8. The combiner cabinet (100) according to claim 5, wherein the first storage space (111) is provided with a plurality of first wiring clips (171) arranged transversely and a plurality of second wiring clips (172) arranged vertically.

9. The combiner cabinet (100) according to claim 8, wherein one side of the first partition plate (151) close to the opening (110) of the cabinet body (11) is provided with a plurality of third wiring clips (173) arranged transversely; wherein cable clamping slots of the first wiring clips (171) and the second wiring clips (172) all face towards the opening (110) of the cabinet body (11), and cable clamping slots of the third wiring clips (173) face upwards.

10. The combiner cabinet (100) according to claim 8, wherein the first storage space (111) is further provided with a third partition plate (153) to divide the first storage space (111) into a space facing the first cabinet door (161) and a space facing away from the first cabinet door (161); wherein the first wiring clip (171) and the second wiring clip (172) are provided on the third partition plate (153); the space facing the first cabinet door (161) is provided with the power distribution unit (12), the space facing away from the first cabinet door (161) is provided with a UPS energy storage battery (131) and a winding element (171), wherein the winding element (174) is configured to organize wiring in the first storage space (111).

11. The combiner cabinet (100) according to any one of claims 1 to 10, wherein the first storage space (111) is provided with a transverse sliding rail (18); the power distribution unit (12) comprises a plurality of power distribution elements (121), wherein the plurality of power distribution elements (121) are movably arranged on the transverse sliding rail (18).

12. The combiner cabinet (100) according to claim 1, further comprising a communication unit (19), wherein the communication unit (19) is arranged on a side wall of the cabinet body (11) and located in the first storage space (111).

13. The combiner cabinet (100) according to claim 1, wherein the combiner unit (14) comprises a plurality of copper bars (141) that extend out from a bottom of cabinet body (11).

14. The combiner cabinet (100) according to claim 1, wherein the combiner unit (14) comprises an isolation switch (142) arranged in the second storage space (112).

15. An energy storage device (1000), comprising a plurality of battery clusters (200) and the combiner cabinet (100) according to any one of claims 1 to 14, wherein the plurality of battery clusters (200) are electrically coupled to the combiner unit (14) of the combiner cabinet (100) respectively.
